(19) **Europäisches Patentamt / European Patent Office / Office européen des brevets**

(11) **EP 2 813 829 B1**

(12) **EUROPEAN PATENT SPECIFICATION**

(45) Date of publication and mention of the grant of the patent:
**19.12.2018 Bulletin 2018/51**

(21) Application number: **13747119.9**

(22) Date of filing: **08.02.2013**

(51) Int Cl.:
*G01J 3/50* (2006.01)    *G01J 3/46* (2006.01)
*G01J 3/52* (2006.01)

(86) International application number:
**PCT/JP2013/053059**

(87) International publication number:
**WO 2013/118868 (15.08.2013 Gazette 2013/33)**

(54) **COATING COLOR EVALUATION METHOD**

AUSWERTUNGSVERFAHREN FÜR BESCHICHTUNGSFARBEN

PROCÉDÉ D'ÉVALUATION DE COULEUR DE REVÊTEMENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.02.2012   JP 2012025028**

(43) Date of publication of application:
**17.12.2014   Bulletin 2014/51**

(73) Proprietor: **KANSAI PAINT CO., LTD.**
**Amagasaki-shi, Hyogo-ken 661-8555 (JP)**

(72) Inventors:
• **MATSUSHITA Akiko**
  **Hiratsuka-shi**
  **Kanagawa 254-8562 (JP)**
• **HARADA Osamu**
  **Hiratsuka-shi**
  **Kanagawa 254-8562 (JP)**

• **KURAMOCHI Tatsuo**
  **Hiratsuka-shi**
  **Kanagawa 254-8562 (JP)**

(74) Representative: **Schweiger, Johannes**
  **Patentanwälte**
  **Becker & Müller**
  **Turmstrasse 22**
  **40878 Ratingen (DE)**

(56) References cited:
  EP-A1- 0 637 731    EP-A1- 1 615 010
  EP-A2- 1 536 215    JP-A- 2006 162 600
  US-A1- 2004 239 928    US-A1- 2009 284 772

• IZUMI SATAKE ET AL.: 'Analysis of the Color Preference of Female College Students on Automotive Exterior by the Use of Multiangle Spectrophotometer' JOURNAL OF THE JAPAN SOCIETY OF COLOUR MATERIAL vol. 80, no. 12, 20 December 2007, pages 1 - 6, XP055159423

EP 2 813 829 B1

## Description

TECHNICAL FIELD

The present invention relates to an evaluation method of a coating color of a coating material containing a color pigment and an effect pigment.

Priority is claimed on Japanese Patent Application No. 2012-025028, filed February 8, 2012.

BACKGROUND ART

Recently, coating materials (for example, metallic coating materials) containing various effect pigments (for example, aluminum flake, mica flake, or graphite) have been widely used. The color of a coating film (hereinafter, referred to as "coating color" or "metallic color") obtained by coating, for example, an automotive outer panel with such a coating material appears to be different depending on viewing angles. On the other hand, a coating color which appears to be the same depending on viewing angles is called a "solid color".

In the related art, when a combination of coating materials for obtaining a desired metallic color is determined, this combination is examined based on experience and knowledge of a technician or a designer in consideration of the respective unique colors of a color pigment (tinting pigment) and an effect pigment (metallic pigment). These pigments have different chromophore mechanisms depending on a structure of a particle, a particle size, and the like, and examples thereof include a pigment that appears to be colored in a highlight region (a viewing angle having a small opening angle from specular reflection light, for example, a light-receiving angle of 15°), a pigment that appears to be colored in a shade region (a viewing angle having a large opening angle from specular reflection light, for example, a light-receiving angle of 75°), a transparent pigment, and a hiding pigment.

Therefore, not only do methods of forming a color sample vary depending on pigment makers, but also when a color sample of each pigment is formed under fixed conditions and is applied to a metallic color, a change in coating color is complex and thus it is hard to identify and evaluate a coating color.

US 2009/284,772 A1 discloses an evaluation method of a coating color of a coating material containing a color pigment and an effect pigment, the method comprising: measuring a spectral reflectance of a coating film of the coating material; and calculating C*/L*, which is a ratio of chroma C* to lightness L* in the L*C*h color space, from the spectral reflectance.

SUMMARY OF INVENTION

PROBLEMS TO BE SOLVED BY THE INVENTION

The present invention has been made in consideration of the above-described circumstances, and an object thereof is to provide a preferable evaluation method of a coating color in which chromogenic properties (coating color) of a coating material containing a color pigment and an effect pigment are evaluated.

MEANS FOR SOLVING THE PROBLEMS

According to one aspect of the present invention for solving the problems, an evaluation method of a coating color of a coating material containing a color pigment and an effect pigment
is provided, the method including: measuring a spectral reflectance of a coating film of the coating material; and calculating C*/L*, which is a ratio of chroma C* to lightness L* in the L*C*h color space, from the spectral reflectance, wherein the method includes the further features of claim 1.

In the evaluation method of a coating color according to the aspect of the present invention, it is preferable that the spectral reflectance be measured at plural light-receiving angles to calculate C*/L* at each of the light-receiving angles.

In the evaluation method of a coating color according to the aspect of the present invention, it is preferable that respective values of C*/L* of plural coating colors be obtained and that the plural coating colors be disposed on a two-dimensional plane in which the values of C*/L* are indicated in one coordinate axis to create a chart.

In the evaluation method of a coating color according to the aspect of the present invention, it is preferable that in the chart, a value of C*/L* be represented in a first coordinate axis, and hue angle h in the L*C*h color space or at least one parameter selected from among the lightness L*, a type of the effect pigment, and content ratios of the color pigment and the effect pigment be represented in a second coordinate axis.

In the evaluation method of a coating color according to the present invention,-the spectral reflectance of the coating film in a highlight region is measured, the spectral reflectance of the coating film in a shade region is measured, and C*/L*, which is a ratio of the chroma C* of the highlight region to the lightness L* of the shade region, is calculated from the spectral reflectance of the highlight region and the spectral reflectance of the shade region.

Advantageous Effects of Invention

According to the aspect of the present invention, respective coating colors of coating materials which are prepared while changing a color pigment are measured, and values of C*L* are mapped using one coordinate axis, that is, are represented on a map (chart). As a result, a distribution of coordinate points which represent coating colors of coating materials having different color pigments is not easily concentrated on the map (chart). Accordingly, coating colors of plural coating materials can be easily identified, which contributes to evaluation of chromogenic properties of the coating materials, that is, evaluation of the coating colors.

In addition, C*/L*, which is a ratio of the chroma C* of the first light-receiving angle region to the lightness L* of the second light-receiving angle region, is calculated. As a result, a result close to visual evaluation (distance scale) of a depth feeling can be obtained.

BRIEF DESCRIPTION OF THE DRAWINGS

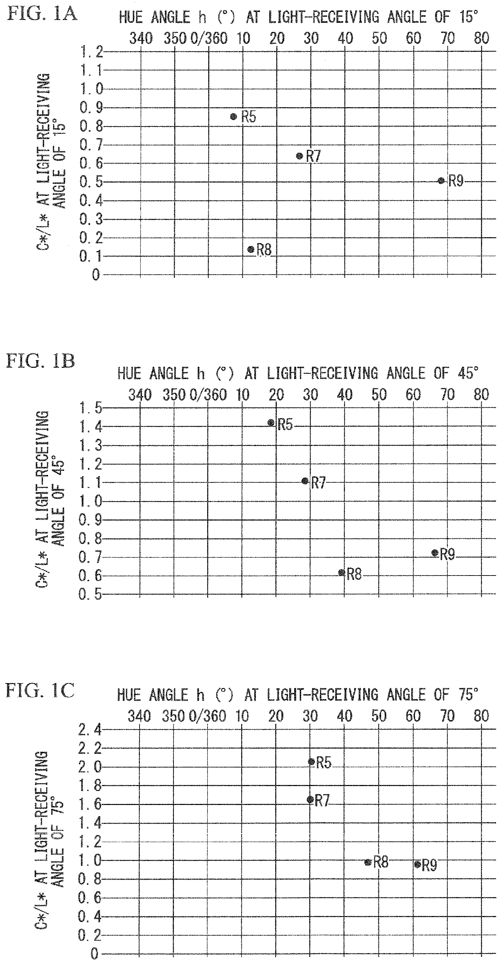

FIG. 1A is a chart illustrating hue angles at a light-receiving angle of 15° of coating colors of plural coating materials which are prepared by mixing the same type and amount of aluminum flake pigment with different red pigments, in which the horizontal axis represents h and the vertical axis represents C*/L*.

FIG. 1B is a chart illustrating hue angles at a light-receiving angle of 45° of coating colors of plural coating materials which are prepared by mixing the same type and amount of aluminum flake pigment with different red pigments, in which the horizontal axis represents h and the vertical axis represents C*/L*.

FIG. 1C is a chart illustrating hue angles at a light-receiving angle of 75° of coating colors of plural coating materials which are prepared by mixing the same type and amount of aluminum flake pigment with different red pigments, in which the horizontal axis represents h and the vertical axis represents C*/L*.

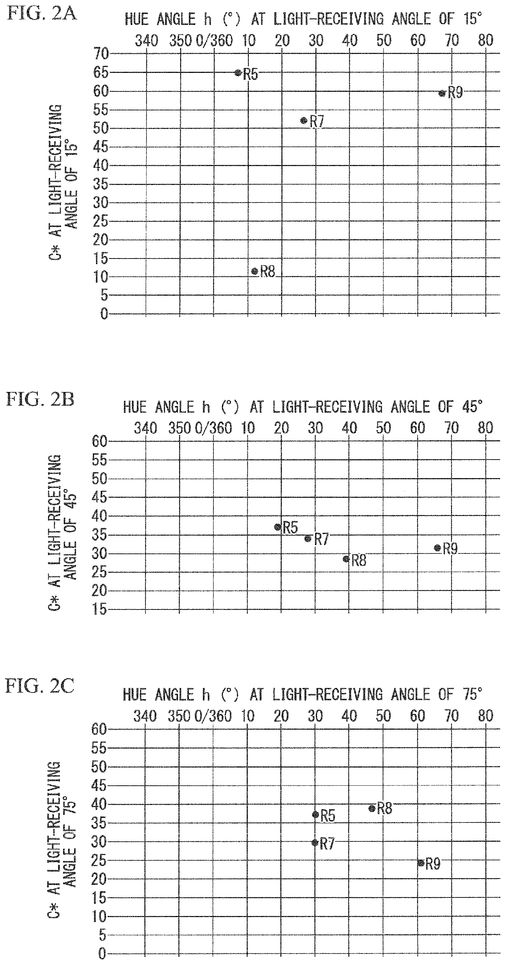

FIG. 2A is a chart illustrating hue angles at a light-receiving angle of 15° of coating colors of plural coating materials which are prepared by mixing the same type and amount of aluminum flake pigment with different red pigments, in which the horizontal axis represents h and the vertical axis represents C*.

FIG. 2B is a chart illustrating hue angles at a light-receiving angle of 45° of coating colors of plural coating materials which are prepared by mixing the same type and amount of aluminum flake pigment with different red pigments, in which the horizontal axis represents h and the vertical axis represents C*.

FIG. 2C is a chart illustrating hue angles at a light-receiving angle of 75° of coating colors of plural coating materials which are prepared by mixing the same type and amount of aluminum flake pigment with different red pigments, in which the horizontal axis represents h and the vertical axis represents C*.

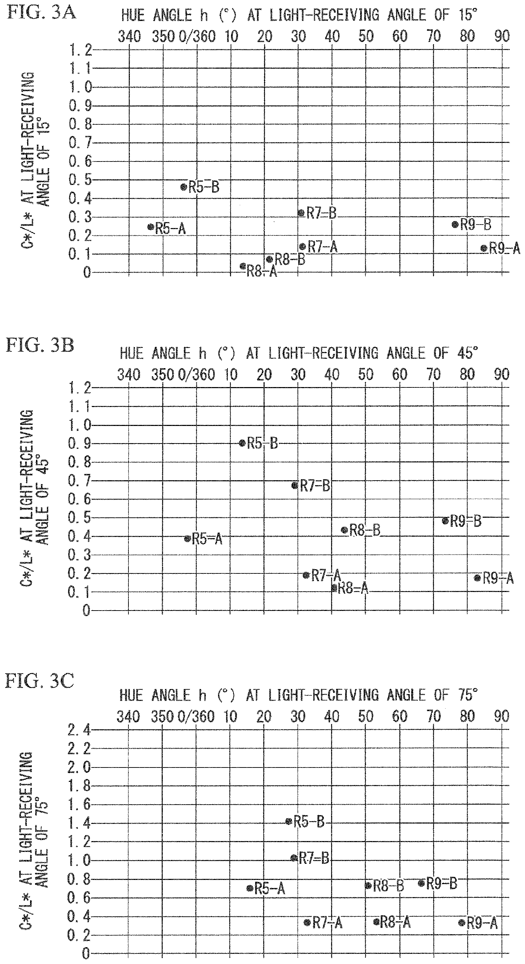

FIG. 3A is a chart illustrating hue angles at a light-receiving angle of 15° of coating colors of plural coating materials which are prepared by mixing a red pigment with different aluminum flake pigments, in which the horizontal axis represents h and the vertical axis represents C*/L*.

FIG. 3B is a chart illustrating hue angles at a light-receiving angle of 45° of coating colors of plural coating materials which are prepared by mixing a red pigment with different aluminum flake pigments, in which the horizontal axis represents h and the vertical axis represents C*/L*.

FIG. 3C is a chart illustrating hue angles at a light-receiving angle of 75° of coating colors of plural coating materials which are prepared by mixing a red pigment with different aluminum flake pigments, in which the horizontal axis represents h and the vertical axis represents C*/L*.

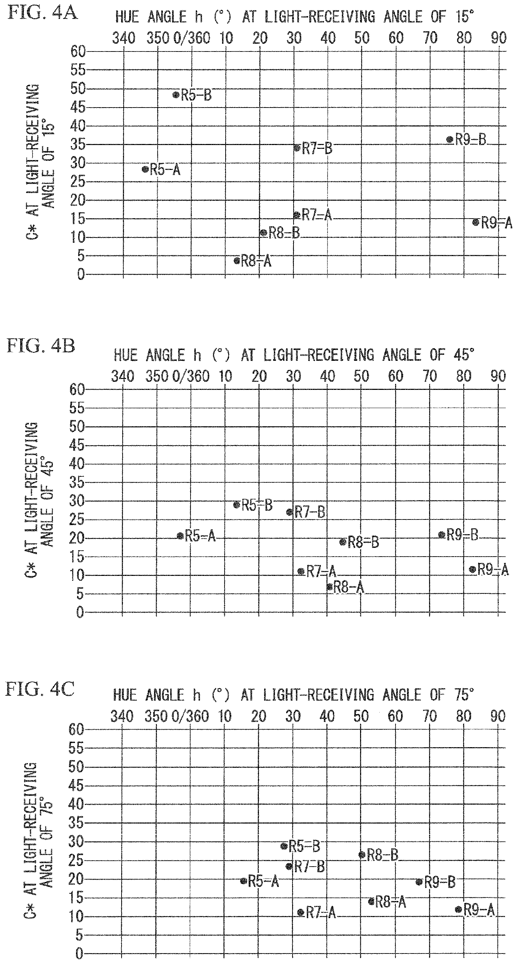

FIG. 4A is a chart illustrating hue angles at a light-receiving angle of 15° of coating colors of plural coating materials which are prepared by mixing a red pigment with different aluminum flake pigments, in which the horizontal axis represents h and the vertical axis represents C*.

FIG. 4B is a chart illustrating hue angles at a light-receiving angle of 45° of coating colors of plural coating materials which are prepared by mixing a red pigment with different aluminum flake pigments, in which the horizontal axis represents h and the vertical axis represents C*.

FIG. 4C is a chart illustrating hue angles at a light-receiving angle of 75° of coating colors of plural coating materials which are prepared by mixing a red pigment with different aluminum flake pigments, in which the horizontal axis represents h and the vertical axis represents C*.

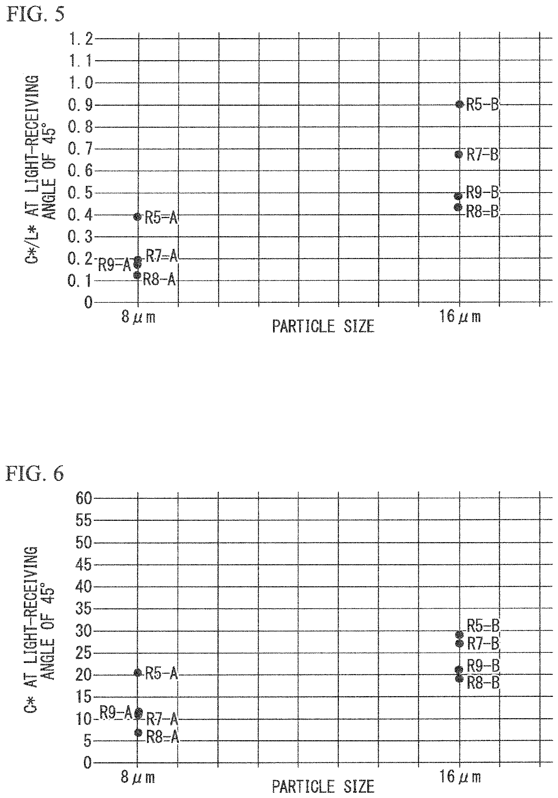

FIG. 5 is a chart (light-receiving angle: 45°) illustrating coating colors of plural coating materials which are prepared by mixing a red pigment with different aluminum flake pigments, in which the horizontal axis represents particle sizes of the aluminum flake pigments and the vertical axis represents C*/L*.

FIG. 6 is a chart (light-receiving angle: 45°) illustrating coating colors of plural coating materials which are prepared by mixing a red pigment with different aluminum flake pigments, in which the horizontal axis represents particle sizes of the aluminum flake pigments and the vertical axis represents C*.

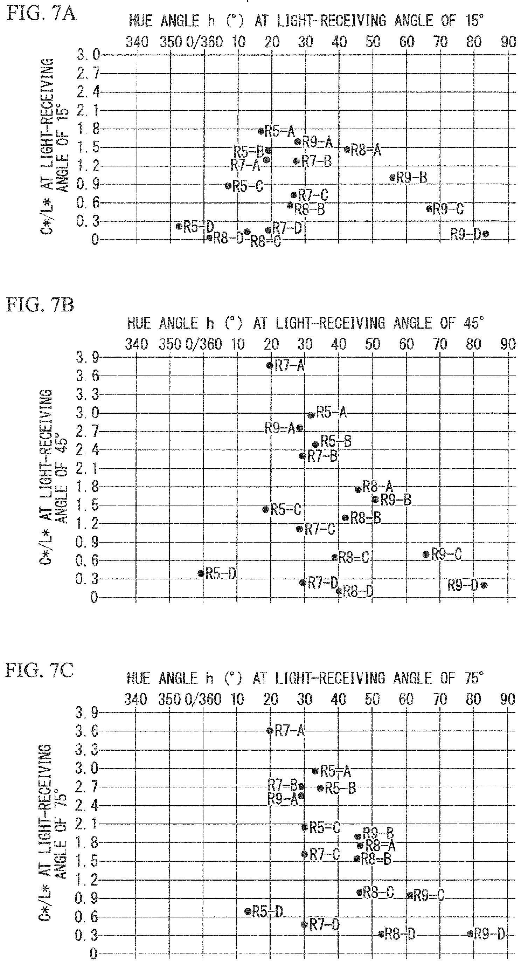

FIG. 7A is a chart illustrating hue angles at a light-receiving angle of 15° of coating colors of plural coating materials which are prepared by mixing a red pigment with an aluminum flake pigment with different mass ratios, in which the horizontal axis represents h and the vertical axis represents C*/L*.

FIG. 7B is a chart illustrating hue angles at a light-receiving angle of 45° of coating colors of plural coating materials which are prepared by mixing a red pigment with an aluminum flake pigment with different mass ratios, in which the horizontal axis represents h and the vertical axis represents C*/L*.

FIG. 7C is a chart illustrating hue angles at a light-receiving angle of 75° of coating colors of plural coating materials which are prepared by mixing a red pigment with an aluminum flake pigment with different mass ratios, in which the horizontal axis represents h and the vertical axis represents C*/L*.

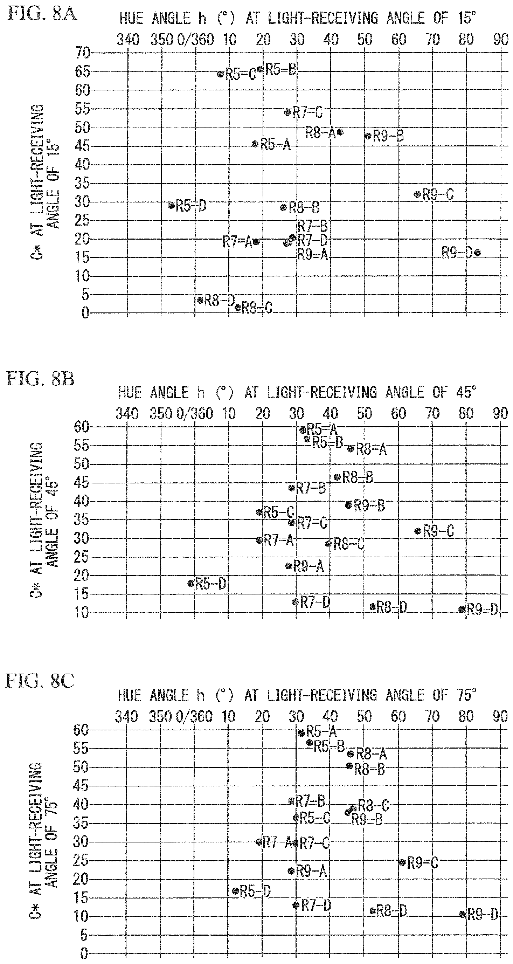

FIG. 8A is a chart illustrating hue angles at a light-receiving angle of 15° of coating colors of plural coating materials which are prepared by mixing a red pigment with an aluminum flake pigment with different mass ratios, in which the horizontal axis represents h and the vertical axis represents C*.

FIG. 8B is a chart illustrating hue angles at a light-receiving angle of 45° of coating colors of plural coating materials which are prepared by mixing a red pigment with an aluminum flake pigment with different mass ratios, in which the horizontal axis represents h and the vertical axis represents C*.

FIG. 8C is a chart illustrating hue angles at a light-receiving angle of 75° of coating colors of plural coating materials which are prepared by mixing a red pigment with an aluminum flake pigment with different mass ratios, in which the horizontal axis represents h and the vertical axis represents C*.

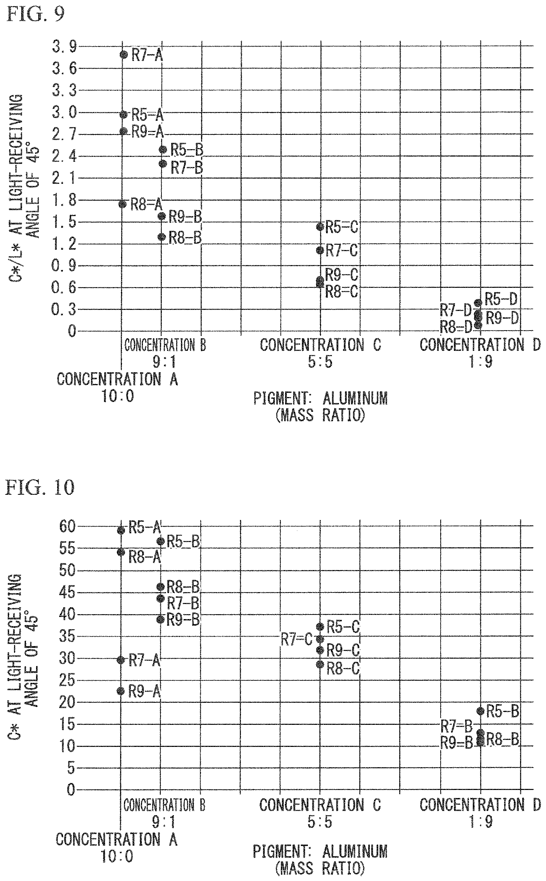

FIG. 9 is a chart (light-receiving angle: 45°) illustrating coating colors of plural coating materials which are prepared by mixing a red pigment with an aluminum flake pigment with different mass ratios, in which the horizontal axis represents the mass ratios and the vertical axis represents C*/L*.

FIG. 10 is a chart (light-receiving angle: 45°) illustrating coating colors of plural coating materials which are prepared by mixing a red pigment with an aluminum flake pigment with different mass ratios, in which the horizontal axis represents the mass ratios and the vertical axis represents C*.

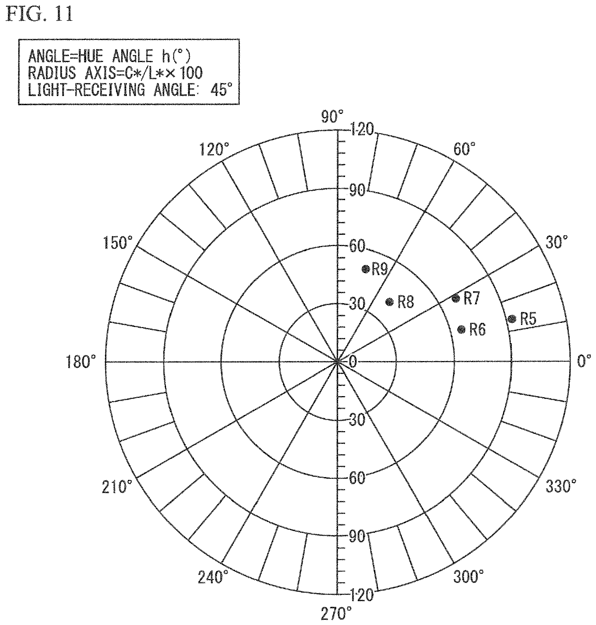

FIG. 11 is a chart in which coating colors of plural coating materials which are prepared by mixing an aluminum flake pigment with different red pigments are plotted on a hue circle.

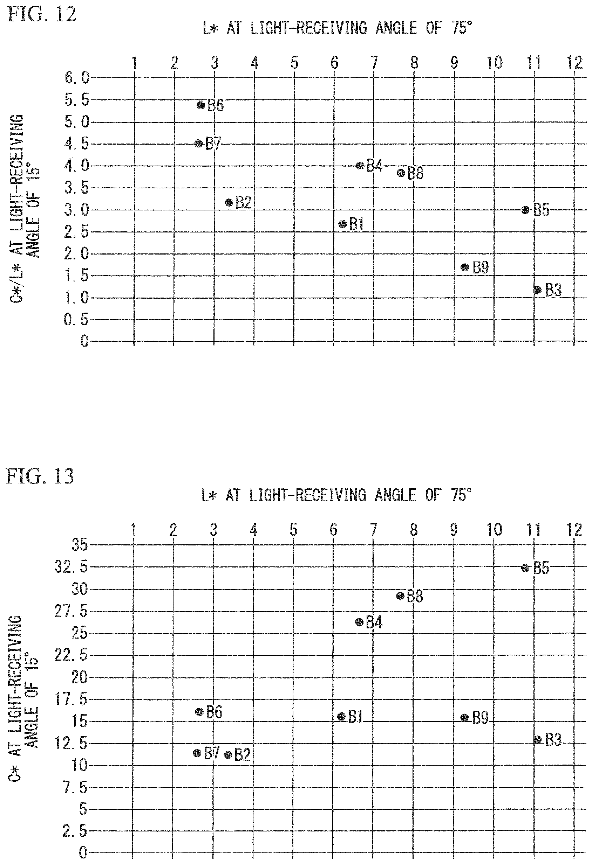

FIG. 12 is a chart illustrating plural dark blue coating colors, in which the horizontal axis represents L* at a light-receiving angle of 75° and the vertical axis represents C*/L* at a light-receiving angle of 15°.

FIG. 13 is a chart illustrating plural dark blue coating colors, in which the horizontal axis represents L* at a light-receiving angle of 75° and the vertical axis represents C* at a light-receiving angle of 15°.

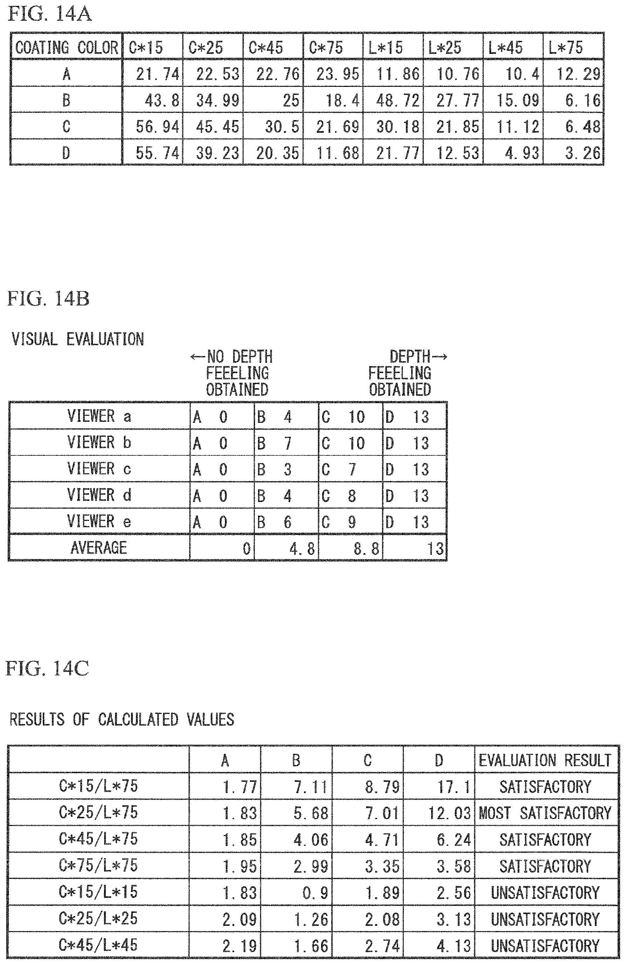

FIG. 14A is a table illustrating respective values of C* and L* of four types of coating colors to compare C*/L* results at light-receiving angles, at which viewing angles are different, with visual estimation results of a depth feeling by a viewer.

FIG. 14B is a table illustrating respective evaluation results of four types of coating colors by five evaluators to compare C*/L* results at light-receiving angles, at which viewing angles are different, with visual estimation results of a depth feeling by a viewer.

FIG. 14C is a table illustrating respective values of C*/L* of four types of coating colors and evaluation results to compare C*/L* results at light-receiving angles, at which viewing angles are different, with visual estimation results of a depth feeling by a viewer.

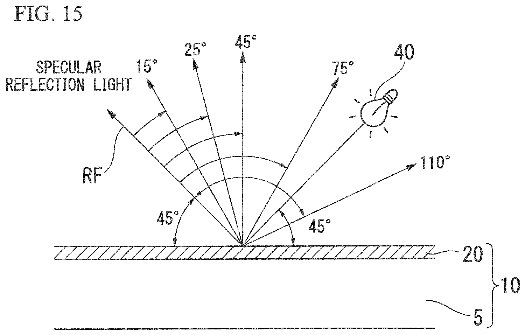

FIG. 15 is a schematic diagram illustrating a method of measuring a spectral reflectance in an embodiment of an evaluation method of a coating color of a coating material according to the present invention.

EMBODIMENTS FOR CARRYING OUT THE INVENTION

Hereinafter, embodiments of the present invention will be described using a preferred embodiment of the present invention.

A coating material according to the present invention is a coating material containing an effect pigment (hereinafter, referred to as "brilliant coating material"). The effect pigment is a pigment in which an appearance of a coating film to which the effect pigment is added varies depending on viewing angles. Specific examples of such a pigment include a scaly metal pigment of aluminum, copper, nickel alloys, stainless steel, or the like; a scaly metal pigment whose surface is coated with a metal oxide; a scaly metal pigment having a surface on which a color pigment is chemically adsorbed; a scaly aluminum flake pigment having a surface on which an aluminum oxide layer is formed by allowing an oxidation-reduction reaction to be caused; a plate-like iron oxide pigment in which aluminum is solid-solubilized; a glass flake pigment; a glass flake pigment whose surface is coated with a metal or a metal oxide; a glass flake pigment having a surface on which a color pigment is chemically adsorbed; an interference mica pigment whose surface is coated with titanium dioxide; a reduced mica pigment obtained by reducing an interference mica pigment; a color mica pigment having a surface on which a color pigment is chemically adsorbed or iron oxide is coated; a graphite pigment whose surface is coated with titanium dioxide; a silica flake or alumina flake pigment whose surface is coated with titanium dioxide; a plate-like iron oxide pigment; a holographic pigment; a synthetic mica pigment; a cholesteric liquid crystal polymer pigment having a helical structure ; and a bismuth oxychloride pigment.

In addition, the brilliant coating material can further contain a commonly-used color pigment in addition to the effect pigment, and examples of the color pigment include an inorganic pigment such as a transparent iron oxide pigment or a composite oxide pigment (for example, titan yellow); an organic pigment such as an azo pigment, a quinacridone pigment, a diketopyrrolopyrrole pigment, a perylene pigment, a perynone pigment, a benzimidazolone pigment, an isoindolin pigment, an isoindolinone pigment, a metal chelate azo pigment, a phthalocyanine pigment, an anthraquinone pigment, a dioxazine pigment, a threne pigment, or an indigo pigment; and a carbon black pigment.

In addition, typically, the brilliant coating material can contain a resin component as a vehicle. Examples of the resin component include a resin component in which a base resin and a crosslinking agent are used in combination, examples of the resin component include an acrylic resin, a polyester resin, an alkyd resin, or a urethane resin, having a crosslinking functional group such a hydroxyl group, and examples of the crosslinking agent include a melamine resin, a urea resin, and a polyisocyanate compound (containing a block).

The brilliant coating material can be prepared by mixing a vehicle, a pigment, a solvent (for example, an organic solvent or water), and, optionally, an appropriate additive with each other and uniformly dispersing a mixture thereof.

FIG. 15 illustrates an embodiment of an evaluation method of a coating color according to the present invention.

A panel 10 (substrate 5) on which a coating film 20 of the brilliant coating material is formed is prepared, and the panel 10 is irradiated with illumination light 30 by an illumination device 40. An angle at which the illumination light 30 is incident on the panel 10 is 45° in a direction parallel to the panel 10 (45° counterclockwise). Among light rays of the illumination light 30 which are reflected from the panel 10, reflected light traveling in a direction indicated by the symbol RF is specular reflection light. The specular reflection light RF forms an angle of 45° (45° counterclockwise) to a normal direction (face) of the panel 10. Reflected light which is reflected at predetermined light-receiving angles (for example, 15°, 25°, 45°, 75°, and 110° in FIG. 15) clockwise to the specular reflection light direction RF is received by a light receiving unit provided in a multi-angle spectrophotometer.

In this case, the light-receiving angles 15° and 25° are positioned in a highlight region (first light-receiving angle region) and between the specular reflection light direction RF and the normal direction of the panel 10.

In addition, the light-receiving angles 75° and 110° are positioned in a shade region (second light-receiving angle region) and between the normal direction of the panel 10 and the direction parallel to the panel 10 (shifted from the normal direction of the panel 10 by 90°). In other words, in the shade region, the light-receiving angle 75° is positioned between the normal direction of the panel 10 and an incident direction of the illumination light 30, and the light-receiving angle 110° is positioned between the incident direction of the illumination light 30 and the direction parallel to the panel 10.

(First Example of Evaluation Method of Coating Color)

In an evaluation method of a coating color a coating film of the brilliant coating material is prepared, a spectral reflectance at a predetermined light-receiving angle is measured, and C*/L*, which is a ratio of chroma C* to lightness L* in the L*C*h color space, is calculated from the spectral reflectance. Further, respective values of C*/L* of plural brilliant coating materials are obtained, and coordinate points representing coating colors of the plural brilliant coating materials are disposed on a two-dimensional plane in which the values of C*/L* are represented in one coordinate axis (first coordinate axis) and another parameter is represented in another coordinate axis (second coordinate axis). When the axis represents C*/L*, a distribution close to visual appearance is obtained compared with a case where the axis represents C*. This is because the maximum value of C* varies depending on L*. As a result, the coating colors of the plural brilliant coating materials can be mapped so as to approach visual appearance, which can contribute to identifying and evaluating chromogenic properties of a metallic color.

The coating color of the brilliant coating material is changed depending on various factors: viewing angles; components used in the coating material including a color pigment, an effect pigment, a vehicle, and other components; content ratios of these components; a coating method, gloss, a film thickness, and the like; and whether or not there is a clear coating material to be laminated on a coating film. Therefore, by mapping these various factors, changes in coating color can be easily understood as the chromogenic properties of the coating material.

A method of preparing a coating film is not particularly limited as long as it is a method capable of coating a substrate with the brilliant coating material at a uniform thickness, and a spray method such as an air spray method, an airless spray method, or an electrostatic spray method is preferably used.

On the substrate, a coating film formed of an undercoating material or an intermediate coating material can be formed before coating the substrate with the brilliant coating material. In addition, one or two or more layers of coating films formed of a clear coating material can be formed on the coating film of the brilliant coating material, for example, to protect the coating film.

Chroma C* and hue angle h in the L*C*h color space can be obtained from color coordinates a* and b* in the L*a*b* color space defined in JIS Z 8729 according to the following expressions (1) and (2).

$$C^* = [(a^*)^2 + (b^*)^2]^{1/2} \ldots (1)$$

$$h = \tan^{-1}(b^*/a^*) \ldots (2)$$

In the expression (2), hue angle h is in a range of 0° to 90° when both a* and b* are positive, is in a range of 90° to 180° when a* is negative and b* is positive, is in a range of 180° to 270° when both a* and b* are negative, and is in a range of 270° to 360° when a* is positive and b* is negative.

Chroma C* and hue angle h defined by the expressions (1) and (2) correspond to ab chroma ($C^*_{ab}$) and ab hue angle ($h_{ab}$) defined by JIS Z 8729, respectively.

An incident angle for measuring a spectral reflectance is typically 45° to the normal direction of the panel.

The light-receiving angle is an angle (in-plane angle perpendicular to a coating film surface) to the specular reflection light direction (indicated by the symbol RF in FIG. 15) and, for example, is 10°, 15°, or 25° on the highlight side and 75° or 110° on the shade side. In addition, a light-receiving angle of, for example, 45° can be adopted as a face side which is positioned around the front of the panel. The spectral reflectance may be measured at plural light-receiving angles to calculate C*/L* at each of the light-receiving angles.

As a spectrophotometer, for example, a multi-angle spectrophotometer MA68II manufactured by Videojet X-Rite K.K can be used.

When plural coating colors are disposed on one chart (map), plural brilliant coating materials which are different in one or two or more aspects are prepared, for example, pigments in which color pigments have different materials, structures, particle sizes, and the like, pigments in which effect pigments have different materials, structures, particle sizes, and the like, pigments in which content ratios of color pigments are different, pigments in which content ratios of effect pigments are different, and pigments in which content ratios of color pigments and effect pigments are different. Then, a coating film is formed for each of the coating materials, and a spectral reflectance thereof is measured to calculate C*/L*.

In the chart, a value of C*/L* can be represented in a coordinate axis (first coordinate axis), and hue angle h in the L*C*h color space or any one of parameters selected from among lightness L*, the type (for example, a material, a structure, or a particle size) of a color pigment, the type (for example, a material, a structure, or a particle size) of the effect pigment, content ratios of the color pigment and the effect pigment, a coating method, gloss of the coating material, the thickness of the coating film, components of the coating material other than the pigments, and the type of other layers laminated with the coating film, and the like can be represented in another coordinate axis (second coordinate axis).

The created chart can be visualized by being displayed on a color display or by being printed on paper, a resin film, or the like using a color printer.

In order to distinguish different coating materials from each other on the chart, a character, a symbol, or the like indicating a name, a symbol a color code, or the like can be added to each coordinate point representing each of the coating materials. This configuration is useful for information communication or information exchange between technicians, designers, users, and the like.

In addition, it is preferable that a label or a small piece in which a coating color is reproduced by a color be added to the each coordinate point to be displayed or printed because the color can be easily specified. In the case of printed matter, an actual color sample can be plotted thereon. In order to form a color sample, a coating material used for measuring a spectral reflectance can also be used. In the case of electronic data, a CG image which reproduces a color appearance can be plotted. As a result, appearances and positions on the chart can be simultaneously compared, which is preferable.

By representing a value of C*/L* on one coordinate axis, a distribution of coordinate points which represent coating colors of coating materials having different color pigments is not easily concentrated, and thus coating colors of plural coating materials can be easily identified.

When coating colors of plural coating materials having the same color pigment and different types (for example, a material, a structure, or a particle size) of effect pigments are collectively represented on one chart, chromogenic properties of coating colors of coating materials having different brightness values or coating materials having different flip-flop properties in which lightness significantly changes depending on viewing angles can be evaluated.

When coating colors of plural coating materials having the same color pigment, the same effect pigment, and different content ratios thereof are collectively represented on one chart, chromogenic properties, which change depending on the content ratios, of the coating colors of the coating materials can be evaluated.

In addition, even if the brilliant coating materials are the same, coating colors may change depending on the thickness of a coating film, the number of times of coating, whether or not there is a clear coating film, and the like. Therefore, a coating method, gloss of the coating material, the thickness of the coating film, components of the coating material other than the pigments, and the type of other layers laminated with the coating film, and the like can be represented in another coordinate axis.

In addition, by calculating values of C*/L* at plural light-receiving angles to create a chart, chromogenic properties in the highlight region and the shade region can be evaluated.

The spectral reflectance of the coating film can be easily measured on a coating line and thus can be applied to comparison of coating colors on an actual coating line.

The evaluation method of a coating color and the method of creating a chart according to the first example can be applied to evaluation of a coating color of a coating material not containing an effect pigment or a coating material which does not appear to be different depending on viewing angles.

(Embodiment of Evaluation Method of Coating Color)

In an embodiment described below, the same components as those in the first example are represented by the same reference numerals, and the description thereof will not be repeated or simplified.

In the embodiment of the evaluation method of a coating color according to the present invention, a method of measuring lightness L* and chroma C* at light-receiving angles having different viewing angles and calculating C*/L* to evaluate "depth feeling" of a coating material is used.

The depth feeling described herein refers to a feeling identified by a viewer based on two types of information, "color" and "depth".

In this embodiment, the spectral reflectance of the coating film in the highlight region (first light-receiving angle region) is measured, and the spectral reflectance of the coating film in the shade region (second light-receiving angle region) is measured. Specifically, chroma C* is measured at light-receiving angles of 15° and 25° in the highlight region, lightness L* is measured at light-receiving angles of 75° and 110° in the shade region, and a value is calculated by dividing C* in the highlight region by L* in the shade region.

In this way, by calculating C*/L* based on numerical values at different viewing angles, for example, a coating film in which a color such as a metallic coating color appears to be different depending on viewing angles can be effectively evaluated for the depth feeling, and the depth feeling can be quantified.

The preferred embodiments of the present invention have been described above. However, it should be noted that these embodiments are merely examples of the present invention and do not limit the present invention. Additions, omissions, substitutions, and other modifications can be made within a range not departing from the scope of the present invention. Accordingly, the present invention is not limited the above description and is only limited to Claims.

[Examples]

Hereinafter, the present invention will be described in more detail using examples.

[Method of Forming Panel]

An intermediate-panel on which a coating film formed of N-6 gray intermediate coating material was coated in advance was prepared, followed by washing with a solvent to remove grease therefrom. Then, a brilliant coating material was sprayed on the panel with an air spray and was cured to form a coating film having a thickness of 20 μm thereon. Next, the panel was held in a laboratory at room temperature of about 20°C for 15 minutes, and a clear coating material was sprayed on the panel with an air spray and was cured to form a coating film having a thickness of 30 μm thereon. Next, the panel was held in a laboratory at room temperature of about 20°C for 15 minutes, and a clear coating material was sprayed on the panel with an air spray and was cured to form a coating film having a thickness of 40 μm thereon. Next, the panel was held in a laboratory at room temperature of about 20°C for 15 minutes and was heated using a warm-air dryer at 140°C for 30 minutes. As a result, a test panel was obtained.

The brilliant coating material was prepared by using a coating material of hydroxyl group-containing acrylic resin-melamine resin organic solvent type as a base coating material and combining the base coating material with a color pigment and an effect pigment.

As the clear coating material, a top clear coating material of hydroxyl group-containing acrylic resin-melamine resin organic solvent type was used.

(Method of Creating Chart)

As illustrated in FIG. 15, a spectral reflectance of the prepared panel was measured, lightness L*, chroma C*, and hue angle h in the L*C*h color space were obtained from the spectral reflectance, and C*/L*, which is a ratio obtained by dividing chroma C* by lightness L*, was calculated.

In order to measure the spectral reflectance, MA68II (trade name, multi-angle spectrophotometer, manufactured by Videojet X-Rite K.K.) was used.

An incident angle of illumination light was 45° to the panel. A light-receiving angle refers to an angle to specular reflection light and was selected from among three angles of 15°, 45°, and 75°.

(Examples of Used Pigments)

Examples of a red color pigment are as follows.

R1: Hostaperm Pink EB transp. (trade name, manufactured by Clariant, dimethylquinacridone)
R2: FASTOGEN Super Red 7064B (trade name: manufactured by DIC Corporation, unsubstituted quinacridone)
R3: Hostaperm Pink EG transp. (trade name, manufactured by Clariant, dichloroquinacridone)
R4: FASTOGEN Super Red ATY-TR (trade name: manufactured by DIC Corporation, anthraquinone)
R5: Irgazin DPP Rubin TR (trade name, manufactured by BASF, diketopyrrolopyrrole)
R6: Irgazin DPP Red BO (trade name, manufactured by BASF, diketopyrrolopyrrole)
R7: Paliogen Red L3885 (trade name, manufactured by BASF, perylene)
R8: TodaColor 130R (trade name, manufactured by Todakogyo Corporation, iron oxide)
R9: Sicotrans Red L2817 (trade name: manufactured by BASF, iron oxide)

As the effect pigment, a scaly aluminum flake pigment was used.

A1: aluminum paste GX-180A (trade name, manufactured by Asahi Kasei Corporation, average particle size: 16 μm)
A2: aluminum paste MH-8801 (trade name, manufactured by Asahi Kasei Corporation, average particle size: 15 μm)

A3: aluminum paste 5680NS (trade name, manufactured by Toyo Aluminum K.K., average particle size: 8 μm)
A4: aluminum paste 7640NS (trade name, manufactured by Toyo Aluminum K.K., average particle size: 17 μm)

(Creation Examples of Chart regarding Coating Colors of Coating Materials having Different Red Pigments)

Four types of red pigments (R5, R7, R8, and R9) were mixed with the same type and amount of aluminum flake pigment (7640NS) to prepare plural coating materials, and spectral reflectance values of coating films thereof were measured to create charts. Regarding the mixing amounts of the pigments, the amount of each of the red pigments was 8.6 parts by mass and the amount of the aluminum flake pigment was 8.6 parts by mass with respect to 100 parts by mass of a resin solid content of the base coating material.

FIGS. 1A to 1C are charts in which the horizontal axis represents h and the vertical axis represents C*/L*. In addition, FIGS. 2A to 2C are charts in which the horizontal axis represents h and the vertical axis represents C*. In each chart, a light-receiving angle was selected from three angles of 15°, 45°, and 75°.

In the charts (refer to FIGS. 2B and 2C) in which the vertical axis represents C* and the light-receiving angle is 45° or 75°, values of C* are close to each other and hard to distinguish although the appearances of the four colors are significantly different. On the other hand, in the charts in which the vertical axis represents C*/L*, values of C*/L* are significantly different from each other, and a distribution thereof is not easily concentrated.

(Creation Examples of Chart regarding Coating Colors of Coating Materials having Different Aluminum flake pigments)

Four types of red pigments (R5, R7, R8, and R9) were mixed with any one of two types of aluminum flake pigments (5680NS, GX-180A) at the same mass ratio to prepare plural coating materials, and spectral reflectance values of coating films thereof were measured to create charts. Regarding the mixing amounts of the pigments, the amount of each of the red pigments was 3 parts by mass and the amount of each of the aluminum flake pigments was 12 parts by mass with respect to 100 parts by mass of a resin solid content of the base coating material.

In FIGS. 3A to 6, a symbol in which "-A" is added to the ends of symbols (R+number) indicating the red pigments implies that the aluminum flake pigment is 5680NS (average particle size: 8 μm). Likewise, a symbol in which "-B" is added to the ends of the symbols (R+number) implies that the aluminum flake pigment is GX-180A (average particle size: 16 μm).

FIGS. 3A to 3C are charts in which the horizontal axis represents h and the vertical axis represents C*/L*. In addition, FIGS. 4A to 4C are charts in which the horizontal axis represents h and the vertical axis represents C*. In each chart, a light-receiving angle was selected from three angles of 15°, 45°, and 75°.

In the charts (refer to FIGS.4B and 4C) in which the vertical axis represents C* and the light-receiving angle is 45° or 75°, values of C* are close to each other and hard to distinguish although the appearances of the four colors are significantly different. On the other hand, in the charts in which the vertical axis represents C*/L*, values of C*/L* are significantly different from each other, and a distribution thereof is not easily concentrated.

By creating such charts, for example, it can be seen that a hue change of R7 is small irrespective of the light-receiving angle and the particle size of the aluminum flake pigment; however, a hue angle change of R5 or R8 is relatively large depending on the light-receiving angle.

FIGS. 5 and 6 are charts in which the horizontal axis represents the particle size of the aluminum flake pigment instead of hue angle h. In FIGS. 3 and 5, values of C*/L* are the same, and in FIGS. 4B and 6, values of C* are the same. In the charts such as FIG. 5 in which the horizontal axis represents the particle size of the aluminum flake pigment, an effect of a difference in particle size on coating colors can be easily understood.

(Creation Examples of Chart regarding Coating Colors of Coating Materials having Different Mixing Ratios of Pigments)

Four types of red pigments (R5, R7, R8, and R9) were mixed with the same type of aluminum flake pigment (7640NS) at four different mass ratios to prepare plural coating materials, and spectral reflectance values of coating films thereof were measured to create charts.

In FIGS. 7A to 10, symbols in which "-A" is added to the ends of symbols (R+number) indicating the red pigments implies that the mass ratio of the red pigment and the aluminum flake pigment is 10:0. Likewise, symbols in which "-B" is added to the ends of the symbols (R+number) implies that the mass ratio is 9:1, symbols in which "-C" is added to the ends of the symbols (R+number) implies that the mass ratio is 5:5, and symbols in which "-D" is added to the ends of the symbols (R+number) implies that the mass ratio is 1:9.

FIGS. 7A to 7C are charts in which the horizontal axis represents h and the vertical axis represents C*/L*. In addition, FIGS. 8A to 8C are charts in which the horizontal axis represents h and the vertical axis represents C*. In each chart, a light-receiving angle was selected from three angles of 15°, 45°, and 75°.

By creating such charts, for example, it can be seen that R5 has a tendency that, as the amount of the aluminum flake pigment increases, the hue angle decreases (red turns into blue); R9 has a tendency that, as the amount of the aluminum flake pigment increases, the hue angle increases (red turns into yellow); and R7 has a tendency that, as the amount of the aluminum flake pigment increases, the hue angle is hard to change.

FIGS. 9 and 10 are charts in which the horizontal axis represents the mass ratios of the pigments instead of hue angle h. In FIGS. 7 and 9, values of C*/L* are the same, and in FIGS. 8B and 10, values of C* are the same. As illustrated in FIG. 10, in the charts in which the vertical axis represents C*, the values of C* of the red pigments R7 and R9 are maximum at the concentration B (mass ratio=9:1) and decrease at a concentration of the red pigment lower or higher than the concentration B. As illustrated in Fig. 10, in the charts in which the vertical axis represents C*/L*, as the ratio of the red pigment increases, the values of C*/L* of all the four types of red pigments (R5, R7, R8, and R9) increases. The reason is presumed to be that apparent chroma (saturation) of a color is more effectively reflected on C*/L*.

(Creation Examples of Chart Plotted on Hue Circle)

A chart (map) created according to the present invention is not limited to a rectangular coordinate system in which two coordinate axes are perpendicular to each other and may also be displayed on other coordinate systems.

FIG. 11 is an example of a chart in which coating colors of plural coating materials which are prepared by mixing an aluminum flake pigment with different red pigments are plotted on a hue circle.

Five types of red pigments (R5, R6, R7, R8, and R9) were mixed with an aluminum flake pigment (GX-180A) to prepare plural coating materials, and spectral reflectance values of coating films thereof were measured to create a chart. Regarding the mixing amounts of the pigments, the amount of each of the red pigments was 3 parts by mass and the amount of the aluminum flake pigment was 12 parts by mass with respect to 100 parts by mass of a resin solid content of the base coating material.

The radial axis represents C*/L* in percentage, that is C*/L*×100.

(Creation Example of Chart of Blue Dark Color)

In this example, as dark blue coating colors which are applied to automotive outer panels commercially available in Japan, 9 types of colors were selected to create a chart.

FIG. 12 is a chart in which the horizontal axis represents L* at a light-receiving angle of 75° and the vertical axis represents C*/L* at a light-receiving angle of 15°, and FIG. 13 is a chart in which the horizontal axis represents L* at a light-receiving angle of 75° and the vertical axis represents C* at a light-receiving angle of 15°. The coating colors B1 to B9 are obtained by combining plural coloring materials, and the present invention is also effective for comparison of coating colors obtained by actually combining plural coloring materials. When values of C* at a light-receiving angle of 15° are compared with each other, B1, B6, and B9 have substantially the same value but, actually, have different lightness values. Therefore, B1, B6, and B9 have different apparent chroma values in the shade region. Therefore, by comparing colors using a chart in which an axis represents C*/L* at a light-receiving angle of 15°, a chart in which the coating colors are close to visual appearance and an apparent difference is reflected is obtained.

(Evaluation Method of Depth Feeling)

FIGS. 14A to 14C are tables for comparing C*/L* results at light-receiving angles, at which viewing angles are different, with visual estimation results of a depth feeling by a viewer. Among these, FIG. 14A is a table illustrating respective values of C* and L* of four types of coating colors, FIG. 14B is a table illustrating respective evaluation results of four types of coating colors by five evaluators, and FIG. 14C is a table illustrating respective values of C*/L* of four types of coating colors and evaluation results.

As illustrated in FIG. 14A, four types of coating colors (A, B, C, and D) were prepared. These four colors were blue metallic coating colors. With the same method as that of the above-described embodiment, a coating film was formed on a substrate using the four types of coating colors. As a result, four panels were obtained. Regarding the four panels, the spectral reflectance was measured using MA68II (trade name, multi-angle spectrophotometer, manufactured by Videojet X-Rite K.K.) to calculate lightness L* and chroma C* in the highlight region, the face region, and the shade region.

In FIG. 14A, C*15 implies chroma at a light-receiving angle of 15° (highlight). C*25 implies chroma at a light-receiving angle of 25° (highlight). C*45 implies chroma at a light-receiving angle of 45° (face). C*75 implies chroma at a light-receiving angle of 75° (shade). L*15 implies lightness at a light-receiving angle of 15° (highlight). L*25 implies lightness at a light-receiving angle of 25° (highlight). L*45 implies lightness at a light-receiving angle of 45° (highlight). L*75 implies lightness at a light-receiving angle of 75° (highlight).

Regarding the four panels formed using the four types of coating colors, C*15, C*25, C*45, C*75, L*15, L*25, L*45, and L*75 were obtained.

Next, as illustrated in FIG. 14B, five viewers (viewer a, viewer b, viewer c, viewer d and, viewer e) evaluated depth feelings of the four panels (distance scale). In this case, the five viewers included four designers and one technician who had experienced design for car exterior coating color for three or more years.

As a result of such visual evaluation, all the five viewers evaluated the panel formed using the coating color A as "evaluation value 0" in which no depth feeling was obtained. In addition, the five viewers evaluated the panel formed using the coating color B as evaluation values 4, 7, 3, 4, and 6, respectively (average value: 4.8).

The five viewers evaluated the panel formed using the coating color C as evaluation values 10, 10, 7, 8, and 9, respectively (average value: 8.8). All the five viewers evaluated the panel formed using the coating color D as "evaluation value 13" in which a depth feeling was obtained.

In the results of such visual evaluation, the depth feeling of the coating color A was lowest, the depth feeling of the coating color B was higher than that of the coating color A, the depth feeling of the coating color C was higher than that of the coating color B, and the depth feeling of the coating color D was higher than that of the coating color C, that is, the depth feeling of the coating color D was highest. Accordingly, the result in which the depth feeling increased in order from the coating colors A, B, C, and D was obtained.

Next, division was performed as illustrated in FIG. 14C to obtain numerical values based on the values of C*15, C*25, C*45, C*75, L*15, L*25, L*45, and L*75 of the four types of coating colors (A, B, C, and D) obtained as illustrated in FIG. 14A.

As a result, when the four types of coating colors were evaluated using numerical values of C*15/L*75, evaluation results corresponding to the visual evaluation results were obtained. That is, it was found that a numerical value obtained by dividing chroma of the highlight region by lightness of the shade region was close to the distance scale of the visual evaluation (evaluation result: satisfactory; a high correlation was obtained).

Likewise, when the four types of coating colors were evaluated using numerical values of C*45/L*75, evaluation results corresponding to the visual evaluation results were obtained. That is, it was found that a numerical value obtained by dividing chroma of the highlight region by lightness of the shade region was close to the distance scale of the visual evaluation (evaluation result: satisfactory; a high correlation was obtained).

Further, when the four types of coating colors were evaluated using numerical values of C*25/L*75, evaluation results corresponding to the visual evaluation results were obtained. That is, it was found that a numerical value obtained by dividing chroma of the highlight region by lightness of the shade region was close to the distance scale of the visual evaluation (evaluation result: most satisfactory; a highest correlation was obtained).

Furthermore, when the four types of coating colors were evaluated using numerical values of C*75/L*75, evaluation results corresponding to the visual evaluation results were obtained. That is, it was found that a numerical value obtained by dividing chroma of the shade region by lightness of the shade region was close to the distance scale of the visual evaluation (evaluation result: satisfactory; a high correlation was obtained).

When the four types of coating colors were evaluated using numerical values of C*15/L*15 and numerical values of C*25/L*25, which are obtained by dividing chroma of the highlight region by lightness of the highlight region, evaluation results corresponding to the visual evaluation results were not obtained (evaluation result: unsatisfactory; a correlation was not obtained).

In addition, when the four types of coating colors were evaluated using numerical values of C*45/L*45, which are obtained by dividing chroma of the face region by lightness of the face region, evaluation results corresponding to the visual evaluation results were not obtained (evaluation result: unsatisfactory; a correlation was not obtained).

It can be presumed from the above-described results that the human eye observes the highlight region and the shade region at the same time; that, regarding chroma, a viewer is impressed by the highlight region having a large dynamic range; and that, regarding lightness, a viewer is impressed by the shade region having a small change.

Hitherto, documents of the related art have disclosed the fact that a depth feeling is obtained when chroma is high and the fact that a depth feeling is obtained when a coating color is black without being turbid and white in the shade region. However, the method according to the present invention in which a depth feeling is evaluated using a numerical value obtained by dividing chroma of the highlight region by lightness of the shade region has not been disclosed in the related art. It is clarified by the invention that a numerical value obtained by dividing chroma of the highlight region by lightness of the shade region is close to the distance scale of the visual evaluation and a high correlation can be obtained.

DESCRIPTION OF REFERENCE NUMERAL

5: SUBSTRATE
10: PANEL
20: COATING FILM
30: ILLUMINATION LIGHT
40: ILLUMINATION DEVICE
RF: SPECULAR REFLECTION LIGHT DIRECTION

Claims

1. An evaluation method of a coating color of a coating material containing a color pigment and an effect pigment, the method comprising:

measuring a spectral reflectance of a coating film of the coating material; and calculating C*/L*, which is a ratio of chroma C* to lightness L* in the L*C*h color space, from the spectral reflectance, wherein the spectral reflectance of the coating film in a highlight light-receiving angle region is measured, the spectral reflectance of the coating film in a shade light-receiving angle region is measured, and C*/L*, which is a ratio of the chroma $C^*$ of the highlight region to the lightness $L^*$ of the shade region, is calculated from the spectral reflectance of the highlight region and the spectral reflectance of the shade region.

2. The evaluation method of a coating color according to Claim 1,
   wherein the spectral reflectance is measured at a plurality of light-receiving angles to calculate $C^*/L^*$ at each of the light-receiving angles.

3. The evaluation method of a coating color according to Claim 1 or 2,
   wherein respective values of $C^*/L^*$ of a plurality of coating colors are obtained, and the plurality of coating colors are disposed on a two-dimensional plane in which the values of $C^*/L^*$ are represented in one coordinate axis to create a chart.

4. The evaluation method of a coating color according to Claim 3,
   wherein, in the chart, a value of $C^*/L^*$ is represented in a first coordinate axis, and hue angle h in the L*C*h color space or at least one parameter selected from among the lightness $L^*$, a type of the effect pigment, and content ratios of the color pigment and the effect pigment is represented in a second coordinate axis.

**Patentansprüche**

1. Evaluierungsverfahren einer Beschichtungsfarbe eines Beschichtungsmaterials, das ein Farbpigment und ein Effektpigment enthält, das Verfahren umfassend:

   Messen einer Spektralreflexion eines Beschichtungsfilms des Beschichtungsmaterials; und Berechnen von $C^*/L^*$, was ein Verhältnis von Farbsättigung $C^*$ zu Helligkeit $L^*$ in dem L*C*h-Farbraum ist, aus der Spektralreflexion, wobei die Spektralreflexion des Beschichtungsfilms in einem Glanzlicht-Lichtempfangswinkelbereich gemessen wird, die Spektralreflexion des Beschichtungsfilms in einem Schatten-Lichtempfangswinkelbereich gemessen wird, und $C^*/L^*$, was ein Verhältnis der Farbsättigung $C^*$ des Glanzlichtbereichs zu der Helligkeit $L^*$ des Schattenbereichs ist, aus der Spektralreflexion des Glanzlichtbereichs und der Spektralreflexion des Schattenbereichs berechnet wird.

2. Evaluierungsverfahren einer Beschichtungsfarbe nach Anspruch 1,
   wobei die Spektralreflexion an einer Vielzahl von Lichtempfangswinkeln gemessen wird, um $C^*/L^*$ an jedem der Lichtempfangswinkel zu berechnen.

3. Evaluierungsverfahren einer Beschichtungsfarbe nach Anspruch 1 oder 2,
   wobei jeweilige Werte von $C^*/L^*$ einer Vielzahl von Beschichtungsfarben erhalten werden und die Vielzahl von Beschichtungsfarben auf einer zweidimensionalen Ebene angeordnet sind, in der die Werte von $C^*/L^*$ in einer Koordinatenachse dargestellt werden, um eine Grafik zu erstellen.

4. Evaluierungsverfahren einer Beschichtungsfarbe nach Anspruch 3,
   wobei in der Grafik ein Wert von $C^*/L^*$ in einer ersten Koordinatenachse dargestellt wird und ein Farbtonwinkel h in dem L*C*h-Farbraum oder mindestens ein Parameter, ausgewählt aus der Helligkeit $L^*$, einer Art des Effektpigments und Zusammensetzungsverhältnissen des Farbpigments und des Effektpigments, in einer zweiten Koordinatenachse dargestellt wird.

**Revendications**

1. Procédé d'évaluation d'une couleur de revêtement d'un matériau de revêtement contenant un pigment de couleur et un pigment à effet, le procédé comprenant :

   la mesure d'une réflectance spectrale d'un film de revêtement du matériau de revêtement ; et le calcul de $C^*/L^*$, qui représente un rapport de la saturation colorée $C^*$ à la luminosité $L^*$ dans l'espace de couleur L*C*h, à partir de la réflectance spectrale, dans lequel la réflectance spectrale du film de revêtement est mesurée dans une région d'angle recevant des hautes lumières, la réflectance spectrale du film de revêtement est mesurée dans une région d'angle recevant la lumière d'ombre, et $C^*/L^*$, qui représente un rapport de la saturation colorée $C^*$ de la région des hautes lumières à la luminosité $L^*$ de la région d'ombre, est calculé à partir de la réflectance spectrale de la région des hautes lumières et de la réflectance spectrale de la région d'ombre.

2. Procédé d'évaluation d'une couleur de revêtement selon la revendication 1,
   dans lequel la réflectance spectrale est mesurée au niveau d'une pluralité d'angles recevant la lumière pour calculer $C^*/L^*$ à chacun des angles recevant la lumière.

3. Procédé d'évaluation d'une couleur de revêtement selon la revendication 1 ou la revendication 2,
   dans lequel les valeurs respectives de $C^*/L^*$ d'une pluralité de couleurs de revêtement sont obtenues, et la pluralité de couleurs de revêtement sont disposées sur un plan à deux dimensions dans lequel les valeurs de C*/L* sont représentées dans un axe de coordonnées pour créer un graphique.

4. Procédé d'évaluation d'une couleur de revêtement selon la revendication 3,
dans lequel, dans le graphique, une valeur de C*/L* est représentée dans un premier axe de coordonnées, et un angle de teinte dans l'espace de couleur L*C*h ou au moins un paramètre choisi parmi la luminosité L*, un type de pigment à effet et des rapports de teneur du pigment de couleur et du pigment à effet est représenté dans un second axe de coordonnées.

FIG. 1A

HUE ANGLE h (°) AT LIGHT-RECEIVING ANGLE OF 15°

FIG. 1B

HUE ANGLE h (°) AT LIGHT-RECEIVING ANGLE OF 45°

FIG. 1C

HUE ANGLE h (°) AT LIGHT-RECEIVING ANGLE OF 75°

FIG. 2A

HUE ANGLE h (°) AT LIGHT-RECEIVING ANGLE OF 15°

FIG. 2B

HUE ANGLE h (°) AT LIGHT-RECEIVING ANGLE OF 45°

FIG. 2C

HUE ANGLE h (°) AT LIGHT-RECEIVING ANGLE OF 75°

14

FIG. 3A

HUE ANGLE h (°) AT LIGHT-RECEIVING ANGLE OF 15°

FIG. 3B

HUE ANGLE h (°) AT LIGHT-RECEIVING ANGLE OF 45°

FIG. 3C

HUE ANGLE h (°) AT LIGHT-RECEIVING ANGLE OF 75°

15

FIG. 4A

HUE ANGLE h (°) AT LIGHT-RECEIVING ANGLE OF 15°

FIG. 4B

HUE ANGLE h (°) AT LIGHT-RECEIVING ANGLE OF 45°

FIG. 4C

HUE ANGLE h (°) AT LIGHT-RECEIVING ANGLE OF 75°

16

FIG. 5

FIG. 6

FIG. 7A

FIG. 7B

FIG. 7C

FIG. 8A

FIG. 8B

FIG. 8C

FIG. 9

FIG. 10

FIG. 11

ANGLE=HUE ANGLE h(°)
RADIUS AXIS=C*/L*×100
LIGHT-RECEIVING ANGLE: 45°

FIG. 12

L* AT LIGHT-RECEIVING ANGLE OF 75°

C*/L* AT LIGHT-RECEIVING ANGLE OF 15°

FIG. 13

L* AT LIGHT-RECEIVING ANGLE OF 75°

C* AT LIGHT-RECEIVING ANGLE OF 15°

## FIG. 14A

| COATING COLOR | C*15 | C*25 | C*45 | C*75 | L*15 | L*25 | L*45 | L*75 |
|---|---|---|---|---|---|---|---|---|
| A | 21.74 | 22.53 | 22.76 | 23.95 | 11.86 | 10.76 | 10.4 | 12.29 |
| B | 43.8 | 34.99 | 25 | 18.4 | 48.72 | 27.77 | 15.09 | 6.16 |
| C | 56.94 | 45.45 | 30.5 | 21.69 | 30.18 | 21.85 | 11.12 | 6.48 |
| D | 55.74 | 39.23 | 20.35 | 11.68 | 21.77 | 12.53 | 4.93 | 3.26 |

## FIG. 14B

VISUAL EVALUATION

| | ←NO DEPTH FEEELING OBTAINED | | | DEPTH→ FEEELING OBTAINED |
|---|---|---|---|---|
| VIEWER a | A 0 | B 4 | C 10 | D 13 |
| VIEWER b | A 0 | B 7 | C 10 | D 13 |
| VIEWER c | A 0 | B 3 | C 7 | D 13 |
| VIEWER d | A 0 | B 4 | C 8 | D 13 |
| VIEWER e | A 0 | B 6 | C 9 | D 13 |
| AVERAGE | 0 | 4.8 | 8.8 | 13 |

## FIG. 14C

RESULTS OF CALCULATED VALUES

| | A | B | C | D | EVALUATION RESULT |
|---|---|---|---|---|---|
| C*15/L*75 | 1.77 | 7.11 | 8.79 | 17.1 | SATISFACTORY |
| C*25/L*75 | 1.83 | 5.68 | 7.01 | 12.03 | MOST SATISFACTORY |
| C*45/L*75 | 1.85 | 4.06 | 4.71 | 6.24 | SATISFACTORY |
| C*75/L*75 | 1.95 | 2.99 | 3.35 | 3.58 | SATISFACTORY |
| C*15/L*15 | 1.83 | 0.9 | 1.89 | 2.56 | UNSATISFACTORY |
| C*25/L*25 | 2.09 | 1.26 | 2.08 | 3.13 | UNSATISFACTORY |
| C*45/L*45 | 2.19 | 1.66 | 2.74 | 4.13 | UNSATISFACTORY |

FIG. 15

SPECULAR REFLECTION LIGHT

RF

15°  25°  45°  75°

45°  45°

110°

40

20

10

5

**EP 2 813 829 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012025028 A
- US 2009284772 A1